# EUROPEAN PATENT SPECIFICATION

(11) **EP 3 017 707 B1**
(45) Date of publication and mention of the grant of the patent: **09.06.2021**
(21) Application number: 13882672.2
(22) Date of filing: 26.04.2013
(51) Int. Cl.: A23L 13/20, A23L 33/20, A23P 30/10, A23K 40/20

(54) **EDIBLE PRODUCT OF ANIMAL ORIGIN AND PRODUCTION METHOD**
ESSBARES PRODUKT TIERISCHEN URSPRUNGS UND HERSTELLUNGSVERFAHREN
PRODUIT COMESTIBLE D'ORIGINE ANIMALE ET SON PROCÉDÉ DE FABRICATION

(43) Date of publication of application: 11.05.2016
(73) Proprietor: Grupo Bimbo, S.A.B. de C.V., Santa Fe, D.F. 01210 (MX)
(72) Inventor: VALDES RODRIGUEZ, Espiridion, Estado de México 50140 (MX)
(74) Representative: Fernández-Pacheco, Aurelio Fernández
(86) International application number: PCT/MX2013/000053
(87) International publication number: WO 2014/175716

(56) References cited:
- ES-A1- 2 197 778
- US-A- 2 562 850
- US-A- 4 163 804
- Anonymous: "Chicharrón prensado | Definición", Diccionario enciclopédico de la gastronomia Mexicana , 27 October 2017 (2017-10-27), pages 1-3, XP055419834, Retrieved from the Internet: URL:https://www.laroussecocina.mx/dicciona rio/definicion/chicharron-prensado [retrieved on 2017-10-27]
- Anonymous: "Chicharrón - Wikipedia, la enciclopedia libre", , 8 April 2013 (2013-04-08), pages 1-7, XP055419820, Retrieved from the Internet: URL:https://es.wikipedia.org/w/index.php?t itle=Chicharrón&oldid=66080626 [retrieved on 2017-10-27]
- Anonymous: "GNPD - Baked Porky Popps Snack", , 1 September 2011 (2011-09-01), pages 1-2, XP055419921, Retrieved from the Internet: URL:http://www.gnpd.com/sinatra/recordpage /1626531/from_search/1yY45s0hvX/?page=1 [retrieved on 2017-10-27]
- DATABASE GNPD [Online] MINTEL; July 2010 (2010-07), anonymous: "Microwave Pork Rind", XP55657395, retrieved from www.gnpd.com Database accession no. 1358848

## Description

The invention of the present application falls under the scope of the food industry, as said invention provides a novelty edible product and a particular process for producing said product, so that both product and process of the invention provide teachings which until today have not been practiced, particularly if the nature and specificity of the product are consider, as the operation conditions and stages or steps involved in product development are dictated by origin or nature of the raw materials used as well as by the characteristics of the final product obtained.

Specifically, the edible product of the invention is known as "chicharrón or pork rind", but substantially differs from pork rinds available in the market until today due to its characteristics such as presentation, physical properties and nutritional value, said characteristics deriving particularly from its preparation process.

It is known that, especially for those skilled persons in meat industrialization process, particularly in pork meat industrialization, whether it is an industrial level process or a "homemade" process as may be a process performed at a "meat store" or at restaurant facilities, the traditional preparation of pork rinds basically consists in frying the "parboiled pork" in a trough containing a substantial fat volume at a temperature slightly above the point of boiling, for a certain period of time and at the discretion of the butcher or employee in charge of the "frying pan", until a fried point in which the product is well fried basically based on the pork rinds color, because definitely said color is a very important factor for stimulating the appetite and for catching the interest of the customer or diner of the product concerned.

An additional step of the chicharrón or pork rinds production process is draining the product off before it is consumed in order to remove the fat excess as much as possible, because it is a product which during the frying process is expanded and it is common that a fat excess occludes the pork rind body obtained.

It is important to mention that the traditional process for producing pork rinds not always meet the principles of hygiene for handling food, it is enough to have a look at the frying pan or saucepan wherein the parboiled pork is fried to doubt about buying the product, said situation could be worst due to the conditions of the environment and facilities where the pork rinds are produced.

Another issue derived from the homemade production, exhibition and sale of the food product concerned is that said product always or generally is exposed to contamination, which is specially caused by careless handling and from its directly exhibition to the environment. In addition to the abovementioned, another problem is the product quality, since the product is derived from pig and its frying process is performed using pork fat, the resulting product has a very high fat content and for that reason there are less and less consumers willing to eat it, generally people tend to avoid eating food which increase health risk, because it is known to everyone that products produced with a fat excess involve serious health issues.

Until today significant efforts have been made in order to offer to the consumer an edible product of pork rinds that meets the hygiene measures needed for producing edible products in an industrial level, i.e. a product having enough quality and produced in an sufficient amount to satisfy the national market and even satisfy the exportation market, product that as the fritters or snacks could be sale in any supermarket or convenience store existing in any community, however small if maybe, which expands the possibilities of success for the product commercialization.

As consumers of meat products such as pork rinds may know, the flavor of this type of products may change over time to strange tastes due to they become rancid as result of the oxidation of the fat contained, which determines the allowed time to be sale and consume, forcing the trader to withdrawn said products from the market, which involve economical losses. This situation has forced the producers to search for solutions to avoid or minimize the existing problem, with the purpose of extend the shelf-life of this type of products, either by vacuum packaging or by adding preservatives, it is clear that regarding pork rinds industrialization this problem has been partially solved. Despite the efforts implemented in this field, the reality is that this industrialized pork rind product, which is now available in the market, is consumed with the recommended health restrictions, because it is still considering as a high fat product, until today said characteristic keeps restricting its consumption although it is an edible product very attractive as snack specially for Latin people.

Due to the importance of the pork rinds in the food diet of the population, wherein in several cases its consumption has been restricted as result of the real concern regarding the product effects over the health of the consumers, there are substantial efforts to develop a product with special characteristics of quality and although said product is not a dietary food may be consumed even for those persons who consider important to stay healthy and to maintain their weight within the recommended aesthetic aspect, especially now that the health sector recommends the diminution of body weight with the purpose of reducing government expenditures corresponding to the health sector.

### Invention Objectives

Therefore, it is a particular objective of the invention to provide a food product of general consumption, which due to its low fat content may be suitable for consumption even for those persons concerned about their health and overweight.

Another objective of the current invention is the production of pork rinds having a longer shelf life than the shelf life of a similar food product available until today in the market.

It is still another objective of the invention to industrially produce a food product derived from pig skin, that regardless of its low-fat content may have an attractive visual aspect and smell as well as the traditional taste of a pork rind.

A further objective of the present invention is an industrial process to produce pork rind, in which the step or stage of frying has been eliminated, obtaining a product with a crunchy texture and traditional pork rind taste.

It is still another objective of the invention to develop a process to industrialize the pork rind, from which a considerably percentage of fat has been removed, but even maintains its nutritional values as well as its consumption as snack.

It is still a further objective of the invention a process which is intended to offer to the consumer market a shaped product having a particular shape which is used as support for a garnish having a thick consistency, e.g. garnishes as "pico de gallo", guacamole, salsa or any other as it is traditional in Mexican cuisine.

It is still another objective of the invention a process to industrialize the parboiled pork, that even when the raw material for producing said product is skin pork trifles, it provides a consistent product having a shape and physical characteristics making said product suitable for being used as support for a garnish, being said garnish one of the commonly used in the Mexican cuisine.

### Drawings

Figure 1 of the accompanying drawings is an schematic view depicting the homemade process followed to produce pork rinds;
Figure 2 is a schematic depict of the different stages performed as part of the industrial process for producing pork rinds;
Figure 3 is a schematic view depicting the different stages or steps of the industrial process of the current invention followed to produce pork rinds;
Fig 4 is a view of the upper part of the product or pork rind obtained by implementing the process of the invention;
Figure 5 is a front view of the product illustrated in Fig. 4 of the accompanying drawings; and
Figure 6 is a front, cross-section view, according to the line a-a marked out in Fig. 4 of the drawings attached.

### Detailed Description of the Invention

Below is a detailed description of the invention according to the accompanying drawings, said drawings are presented for the only purpose of illustrate more clearly the invention.

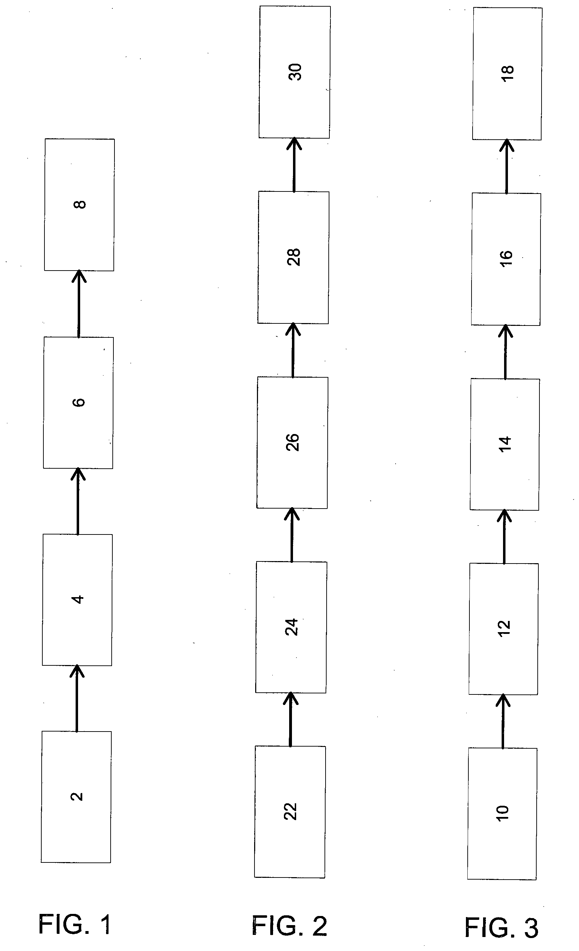

According to what is depicted in the accompanying drawings, particularly in Figures 1 and 2, in which have been illustrated in an schematic way the traditional processes followed to produce pork rinds, and Figure 3 has illustrated the process developed by the inventor of the current invention.

As illustrated in Figure 1 of the accompanying drawings, the traditional process followed for the preparation of pork rind consists of frying the parboiled pork 2, being said parboiled pork pieces of substantial size, in a frying pan 4 containing pig fat at boiling point for the enough period of time, until the parboiled pork turns its color indicating it is enough fried. Once the parboiled pork is enough fried, said parboiled pork is removed from the frying pan and drain off 6 in order to remove the fat excess from the pork rind awhile it is allow to reach the environment temperature, with this step the product is finished 8, and it is available to clients who generally select the pieces of pork rinds that meet their culinary expectations, of course the finished product can remain available to possible clients for varying periods, awhile as it is usual the product is exposed to the environment contamination, and for that reason said produced pork rinds are considered a non-hygienic product, also the fat contained in the frying pan to fry said parboiled pork is neither safe for being consumed.

Currently, significant efforts have been made to industrialize the concerning, said efforts comprising the improve of sanitary conditions to produce said pork rind, however, basically the traditional steps are still followed with the exception of that before frying the parboiled pork, said parboiled pork is disposed in small pieces of a general rectangular configuration of 2 cm by side and then is packaged for its display and sale. The product resulted from the pork rinds industrialization has other favorable characteristics as having a lower amount of monounsaturated fat, having reduced cholesterol content and having decreased energetic value, the producers consider said advantages very positive because they help to increase the product acceptance. Notwithstanding the foregoing, the pork rind prepared under the guidelines abovementioned presents an important fat content, which could be easily corroborate by observing the pieces of said pork rind contained in the packages.

Both the pork rind produced using the traditional process and the pork rind produced using the industrialized process until now constitute an edible product, particularly a snack, or a product that could be used to prepare a stew, being both ways of consumption very tasty and both satisfy the taste preferences of the majority of the population, being an exception the population sector which is not able to consume said product due to a medical prescription, or for those who has an allergic reaction when eating said product, because definitely this is not a dietary product.

At the schematic depict of the industrial process which has been performed, numbers 22 to 32 indicate the different steps to perform said process, which consist of maintaining as available an adequate amount of parboiled pork 22; chopping it up into small pieces 24 having an approximated size of 2 cm per side; frying it 26; draining it off 28; and packaging it 30.

The differences between the homemade process and the industrial process above described could be summarized in that as part of the industrial process the parboiled pork is cut in small pieces before being fried and it is packed in bags for its display and sale, even though the finished product is similar in appearance but said product differs in its energy content, total fat, monounsaturated fat, cholesterol, sodium and proteins, being all this evident in the comparative table below.

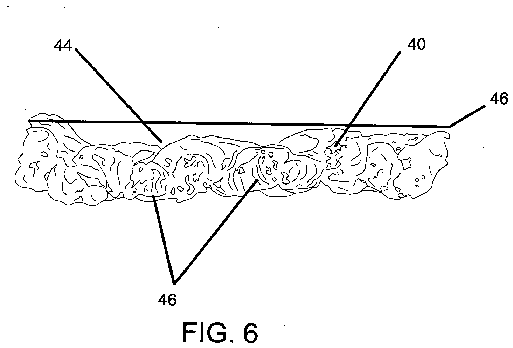

However, regarding the invention process of the present invention as well as the resulting product, which is illustrated at the accompanying Figures 3 to 6, would be confirmed that both the process and the obtained product show aspects and characteristics that distinguish the processes bused until now from the process developed by the inventor and which is claimed, said process including as raw material parboiled pork or pork skin 10, but said parboiled pork or pork skin should be grinding 12 having a particle size ranging between 2 to 4 mm, which resulting flakes are disposed in a hopper 14 to be then distributed and poured into moulds having different configuration 16 receiving the flake parboiled pork or pork skin, said moulds are preheated to a temperature of between 170 to 200 °C.

Once said parboiled pork flakes are disposed into the moulds 16, it is exerted a pressure of 4 to 8 kg/cm² during between 3 to 6 seconds, then the resulted product is discharged, depending the moulds configuration said products may be round- or rectangular-shaped or any other shape.

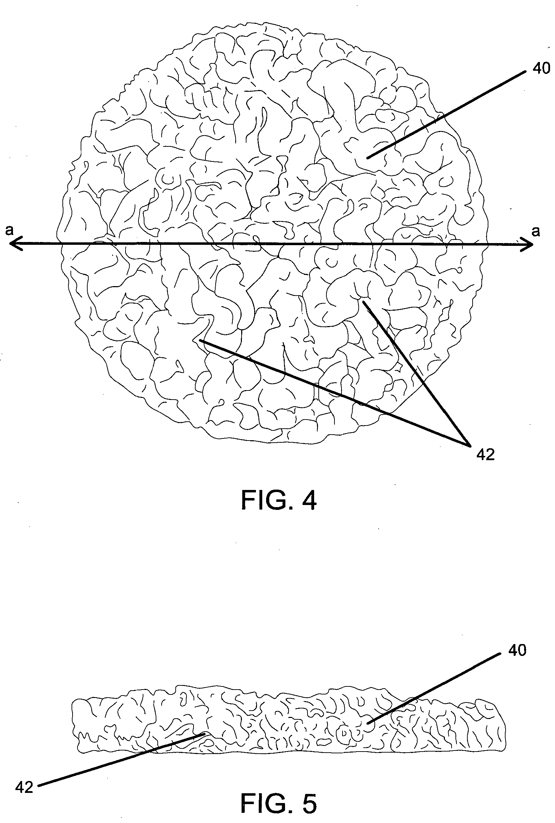

Only with illustrative purposes, Figures 4 to 6 represent the product 40, which is resulted from the process, as a circular configuration having an approximate diameter from 7 to 10 cm and a thickness of almost 1 cm.

Said product derived from pork or pork skin presents a texture of random agglomerate 42, which is shaped by clumping parboiled pork particles poured into moulds. As a consequence of compressing the parboiled pork particles, the slices of pork or pork skin present a sunken face 44 around the crest 46, what is used to contain a salad or guacamole poured into said slices.

As result of processing the parboiled pork flakes, the pork rind slices to be somehow named, form a crunchy product, that is alike traditional pork rinds and pleasing to the eye as to the palate, but that in fact it could be consider as a "light pork rid" which could be consumed by any consumer because it has a lower fat percentage than the traditional pork rind, particularly due to during its production the step of frying in pork fat is suppressed, this is added to the other characteristics presented by said pork rind produced with said process.

The following provides a table containing the summary of the nutritional information of the pork rind produced using a homemade process, an industrial process, as well as the pork rind produced following the teachings of the current invention:

| | Homemade process | Industrial process | Non-fried (invention) |
|---|---|---|---|
| Energy content | 160 calories | 137 calories | 110 calories |
| Total fat | 10.8 grammes | 9 grammes | 3.5 grammes |
| Saturated fat | 4 grammes | 4 grammes | 3.5 grammes |
| Monounsaturated fat | 5.7 grammes | 3.5 grammes | 0.0 grammes |
| Polyunsaturated fat | 1.1 grammes | 1.0 grammes | 0.0 grammes |
| Cholesterol | 29.7 grammes | 20.0 grammes | 18 grammes |
| Sodium | 477 mg | 430 mg | 430 mg |
| Dietary fiber | 0 grammes | 0 grammes | 0.0 grammes |
| Carbohydrates | 0 grammes | 0 grammes | 0.0 grammes |
| Sugar | 0 grammes | 0 grammes | 0.0 grammes |
| Proteins | 15.7 grammes | 14 grammes | 14 grammes |

Approximate shelf life of the three different types of pork rind:

| Homemade process, fried | Industrial process, fried | Non-fried |
|---|---|---|
| 2 to 4 weeks | 16 weeks | 18 weeks |

Density based on apparent volume of the three different types of pork rind:

| Homemade process, fried | Industrial process, fried | Non-fried |
|---|---|---|
| 100 gr/lt | 46 gr/lt | 23 gr/lt |

Differences between proportional cost of production:

| Homemade process, fried | Industrial process, fried | Non-fried |
|---|---|---|
| 100 | 100 | 80 |

As showed by the data previously provided, it is clear that the food product of the invention, which protection is claimed, offers novel characteristics in both its configuration and its nutritional qualities, even said product may be considered as a pork rind substitute in the current market it is obviously a different product which preserves the qualities of a natural origin product and which is additive-free; and as a result of the method used to process the parboiled pork it has been possible to industrialize and place in the market an improved, natural and a well-accepted edible product.

## Claims

1. A process for preparing an edible non-fried product of animal origin, which comprises the following steps:
a) flaking or grinding parboiled pork or pork skin to a size ranging between 2 and 4 mm;
b) dosing the flaked product into previously heated moulds;
c) subjecting said parboiled pork or pork skin contained in the moulds to pressure for a pre-determined period of time, wherein the compression of the pieces of parboiled pork or pork skin in the moulds that were previously heated to a temperature ranging between 170°C and 200°C ranges between 4 and 8 kg/cm2, and the stay time in the moulds ranges between 3 and 6 s;
d) removing the processed pork or pork skin thus moulded; and
e) placing the processed pork or pork skin in bags for the distribution and sale thereof.

2. The process according to claim 1, further comprises the following step: before the filling of the moulds, the ground parboiled pork or pork skin is mixed with parboiled pork crumbs that are smaller than stipulated, in a proportion that does not exceed 10% of the total crushed parboiled pork used.

3. The process according to any of the preceding claims, wherein the moulded pork or pork skin take on a circular or rectangular configuration, or any other shape, depending on the configuration of the moulds used, and the consistency of the lumps formed from the moulded pieces of parboiled pork or pork skin is such that said pork or pork skin obtained preserve their moulded shape inside the packages wherein they are placed for the distribution and sale thereof.

4. The process according to claim 3, wherein the moulding and cooking of the pork or pork skin is performed without adding any fat other than the one that is part of the parboiled pork or the pork skin used.

5. An edible product of animal origin which is obtained with the process claimed in any one of claims 1 or 2, **characterized in that**:
a) it is not fried and it has similar appearance to traditional fried pork rind ("chicharròn");
b) it consists of molded pieces of small chunks of pork or pork skin having a particle size of 2-4 mm agglutinated together by the action of heat and pressure.
c) its mean total fat content is 3.5 grams, because it is not fried, compared to the industrial frying method, which results in 9 grams, and that of the homemade method, which is 10.8 grams;
d) its mean cholesterol content is 18 grams, because it is not fried, compared to the industrial frying method, which results in 20 grams, and that of the homemade method, which is 29.7 grams;
e) its mean shelf life is 18 weeks, because it is not fried, compared to the industrial frying method, which results in 16 weeks, and that of the homemade method, which is 2-4 weeks;
f) its mean density based on its apparent volume is 23 gr/L, because it is not fried, compared to the industrial frying method, which results in 46 gr/L, and that of the homemade method, which is 100 gr/L.

6. The edible product of claim 5, has a density 40%-50% lesser compared to the density of the homemade pork rind.

7. The edible product according to any of claims 5 or 6, **characterized by** the molded pieces have a rounded, rectangular or any other configuration derived from the shape of the molds used.

## Patentansprüche

1. Verfahren zur Herstellung eines essbaren, nicht gebratenen Produkts tierischen Ursprungs, das die folgenden Schritte umfasst:
a) Flockieren oder Mahlen von halb gekochtem Schweinefleisch oder Schweineschwarte auf eine Größe zwischen 2 und 4 mm;
b) Dosieren des flockigen Produkts in zuvor erhitzte Formen
c) Aussetzen des in den Formen enthaltenen halb gekochtem Schweinefleischs oder der Schweineschwarte eines Drucks für eine vorbestimmte Zeitspanne, wobei das Zusammenpressen der Stücke des halbgekochten Schweinefleischs oder der Schweineschwarte in den Formen, die zuvor auf eine Temperatur im Bereich zwischen 170°C und 200°C erhitzt wurden, zwischen 4 und 8 kg/cm2 liegt und die Verweilzeit in den Formen zwischen 3 und 6 s liegt;
d) Entfernen des geformten verarbeiteten Schweinefleischs oder der Schweineschwarte; und
e) Abfüllen des verarbeiteten Schweinefleischs oder der Schweineschwarte in Säcke für den Vertrieb und Verkauf.

2. Das Verfahren nach Anspruch 1, umfasst ferner den folgenden Schritt: vor dem Befüllen der Formen, wird das gemahlene halb gekochte Schweinefleisch oder die Schweineschwarte mit halb gekochten Schweinefleischbröckchen gemischt, die kleiner als vorgeschrieben sind, und zwar in einem Anteil, der 10 % des gesamten verwendeten zerkleinerten halb gekochten Schweinefleischs nicht überschreitet.

3. Verfahren nach einem der vorhergehenden Ansprüche, bei dem das geformte Schweinefleisch oder die Schweineschwarte eine kreisförmige oder rechteckige oder jede andere Form annimmt, je nach Einstellung der verwendeten Formen, und die Konsistenz der Brocken, die aus den geformten Stücken des halb gekochten Schweinefleischs oder der Schweineschwarte gebildet werden, so ist, dass das erhaltene Schweinefleisch oder die Schweineschwarte ihre geformte Form innerhalb der Verpackungen beibehält, in die sie für den Vertrieb und den Verkauf gefüllt werden.

4. Verfahren nach Anspruch 3, wobei das Formen und Kochen des Schweinefleischs oder der Schweineschwarte ohne Zugabe von anderem Fett als dem des halb gekochten verwendeten Schweinefleischs oder der Schweineschwarte durchgeführt wird.

5. Essbares Produkt tierischen Ursprungs, das nach dem Verfahren gemäß einem der Ansprüche 1 oder 2, das **dadurch gekennzeichnet ist, dass**: erhalten wird,
a) es nicht frittiert ist und ein ähnliches Aussehen wie traditionell frittierte hat Schweineschwarte ("Chicharrón")
b) es aus geformten Stücken aus kleinen Brocken von Schweinefleisch oder Schweineschwarte mit einer Stückgröße von 2-4 mm, die durch die Einwirkung von Hitze und Druck miteinander verklumpt sind;
c) sein mittlerer Gesamtfettgehalt 3,5 Gramm beträgt, weil es nicht frittiert wird, verglichen mit der industriellen Frittiermethode, die 9 Gramm ergibt, und dem der hausgemachten Methode, die 10,8 Grammbeträgt;
d) sein mittlerer Cholesteringehalt 18 Gramm beträgt, da er nicht frittiert wird, verglichen mit der industriellen Frittiermethode, die 20 Gramm ergibt, und dem der hausgemachten Methode, die 29,7 Gramm beträgt;
e) seine mittlere Haltbarkeit 18 Wochen beträgt, weil es nicht frittiert wird, verglichen mit der industriellen Frittiermethode, die 16 Wochen ergibt, und die der hausgemachten Methode, die 2-4 Wochen beträgt;
f) seine mittlere Dichte in Bezug auf sein scheinbares Volumen 23 gr/L beträgt, weil es nicht frittiert wird, verglichen zu der industriellen Frittiermethode, die 46 gr/L ergibt, und die der hausgemachten Methode, die 100 gr/L beträgt.

6. Das essbare Produkt nach Anspruch 5, hat eine um 40 % - 50 % geringere Dichte im Vergleich zur Dichte der hausgemachten Schweineschwarte.

7. Essbares Produkt nach einem der Ansprüche 5 oder 6, das **dadurch gekennzeichnet ist, dass** die gepressten Stücke eine runde, rechteckige oder eine beliebige andere Konfiguration aufweisen, die sich aus der Form der verwendeten Pressformen ergibt.

## Revendications

1. Processus de préparation d'un produit comestible non frit d'origine animale, comprenant les étapes suivantes :
a) hachage ou broyage de viande ou de peau de porc étuvée jusqu'à une dimension comprise entre 2 et 4 mm ;
b) dosage des morceaux de produits dans des moules préalablement chauffés
c) la viande ou la peau de porc étuvée, contenue dans les moules, est soumise à la pression pendant une période de temps prédéfinie et les morceaux étuvés de viande ou de peau de porc comprimés dans les moules préalablement chauffés à une température comprise entre 170°C et 200°C, pèsent entre 4 et 8 kg/cm2, et restent entre 3 et 6 secondes dans les moules ;
d) la viande ou la peau de porc transformée et ainsi moulée est ensuite retirée des moules, puis
e) elle est conditionnée dans des sachets pour la distribution et la vente.

2. Le processus selon le procédé 1, comprend en outre l'étape suivante :avant le remplissage des moules, la viande ou la peau de porc hachée et étuvée est mélangée avec des miettes de porc étuvées plus petites que stipulées, dans une proportion qui ne dépasse pas 10% du total de la viande de porc étuvée utilisée.

3. Le processus selon l'une des méthodes précédentes, est le procédé par lequel la viande ou la peau de porc moulée prend une forme circulaire ou rectangulaire, ou toute autre forme, en fonction de la forme des moules utilisés, et la consistance des morceaux formés à partir des morceaux moulés de viande ou de peau de porc sont de telle sorte que cette viande ou cette peau de porc conserve sa forme moulée à l'intérieur des emballages où elle est conditionnée pour la distribution et la vente.

4. Le processus selon la méthode 3 est le procédé par lequel le moulage et la cuisson de la viande ou de la peau de porc sont effectués sans ajout de graisse, autre que celle de la viande ou de la peau de porc utilisée.

5. Le produit comestible d'origine animale obtenu par le processus selon l'une des méthodes 1 ou 2, se caractérise ainsi :
a) ce n'est pas un produit frit et son aspect est similaire au produit couenne de porc traditionnel frit ("chicharron") ;
b) il s'agit de petits morceaux de viande ou de peau de porc moulés ayant une granulométrie de 2 à 4 mm agglutinés entre eux par l'action de la chaleur et de la pression;
c) comme il n'est pas frit, sa teneur moyenne en graisse totale n'est que de 3,5 grammes, alors que les méthodes de friture industrielles obtiennent un total de 9 grammes de graisse totale et que la méthode artisanale en obtient 10.8 grammes;
d) comme il n'est pas frit, sa teneur moyenne en cholestérol n'est que de 18 grammes, alors que les méthodes de friture industrielles obtiennent un total de 20 grammes de cholestérol et que la méthode artisanale en obtient 29.7 grammes;
e) comme il n'est pas frit, sa durée de vie moyenne est de 18 semaines, alors que les méthodes de friture industrielles donnent des produits ayant 16 semaines de durée de vie et que les produits de la méthode artisanale ne peuvent aller au-delà de la 2 à 4 semaines ;
f) comme il n'est pas frit, sa densité moyenne par rapport à son volume apparent est de 23 gr/L, par rapport aux méthodes de friture industrielles qui donnent des produits de densité de 46 gr/L, et par rapport à la méthode maison, qui donne une densité de 100 gr/L.

6. Les produits comestibles obtenus par le procédé 5, ont une densité de 40% à 50% inférieure par rapport à la densité des couennes de porc faites maison.

7. Les produits comestibles obtenus selon l'un des procédés 5 ou 6, se caractérisent en ce que les pièces moulées sont de forme arrondie, rectangulaire ou de tout autre type de forme, en fonction de la forme des moules utilisés.
